# EUROPÄISCHE PATENTSCHRIFT

(11) **EP 2 001 630 B1**
(45) Veröffentlichungstag und Bekanntmachung des Hinweises auf die Patenterteilung: **19.10.2011**
(21) Anmeldenummer: 07701283.9
(22) Anmeldetag: 29.01.2007
(51) Int. Cl.: B23K 9/29

(54) **VERFAHREN ZUR REINIGUNG EINES KONTAKTROHRES EINES SCHWEISSBRENNERS SOWIE SCHWEISSBRENNER UND KONTAKTROHR**
METHOD OF CLEANING A CONTACT TUBE OF A WELDING TORCH, AND A WELDING TORCH AND CONTACT TUBE
PROCEDE DE NETTOYAGE D`UN TUBE DE CONTRACT D`UN BRULEUR DE SOUDAGE AVEC TUBE DE CONTRACT

(30) Priorität: 04.04.2006 AT 5732006
(43) Veröffentlichungstag der Anmeldung: 17.12.2008
(73) Patentinhaber: Fronius International GmbH, 4643 Pettenbach (AT)
(72) Erfinder: RÜHRNÖSSL, Manfred, A-4030 Linz (AT); STAUFER, Herbert, A-4501 Neuhofen an der Krems (AT)
(74) Vertreter: Sonn & Partner Patentanwälte
(86) Internationale Anmeldenummer: PCT/AT2007/000037
(87) Internationale Veröffentlichungsnummer: WO 2007/112461

(56) Entgegenhaltungen:
- DE-A1- 19 739 217
- US-A- 4 280 043
- US-A- 4 450 341

## Beschreibung

Die Erfindung betrifft ein Verfahren zur Reinigung eines Kontaktrohres eines Schweißbrenner gemäß dem Oberbegriff des unabhängigen Anspruchs 1 über das ein von einer Drahtrolle oder einem Drahtfass über eine Drahtfördervorrichtung zum Schweißbrenner bewegter Schweißdraht mit elektrischer Energie versorgt wird.

Weiters betrifft die Erfindung eine Schweißanlage gemäß dem Oberbegriff des unabhägigen Anspruchs 18 mit einer Stromquelle und einem Schweißbrenner mit Kontaktrohr zur Versorgung eines von einer Drahtrolle über eine Drahtfördervorrichtung zum Schweißbrenner bewegten Schweißdrahtes mit elektrischer Energie. Ein solches Verfahren und eine solche schweißanlage sind der US4280043 zu entnehmen.

Die Erfindung bezieht sich auf Schweißverfahren, bei welchen ein Schweißdraht von einer Drahtrolle oder einem Drahtfass in den Bereich des Schweißbrenners zugeführt wird. Dabei brennt der Lichtbogen zwischen dem Schweißdraht und den zu verbindenden Werkstücken. Zur elektrischen Kontaktierung des Schweißdrahtes wird dieser durch ein im Schweißbrenner angeordnetes Kontaktrohr, welches mit der Stromquelle verbunden ist, geführt. Zu diesem Zweck weist das Kontaktrohr eine Innenbohrung auf, durch welche der Schweißdraht zum Werkstück befördert wird. Der für die Aufrechterhaltung des Lichtbogens zwischen Schweißdraht und Werkstück erforderliche Schweißstrom fließt über das Kontaktrohr in den Schweißdraht. Für die Erzielung eines niedrigen elektrischen Widerstands ist es erforderlich, die Innenbohrung im Kontaktrohr an den Schweißdrahtdurchmesser entsprechend anzupassen und nur unwesentlich größer zu gestalten. Andererseits darf die Reibung des Schweißdrahtes in der Innenbohrung des Kontaktrohres nicht zu groß sein, da es sonst zu Problemen bei der Bewegung des Schweißdrahtes kommen kann und darüber hinaus ein größerer Abrieb des Schweißdrahtes stattfinden kann. Üblicherweise wird der Durchmesser der Innenbohrung des Kontaktrohres etwa 20 % größer als der Durchmesser des Schweißdrahtes gewählt.

Die vorliegende Erfindung kann bei sämtlichen Schweißprozessen, bei welchen ein Schweißdraht als abschmelzende Elektrode eingesetzt wird, verwendet werden.

Das Kontaktrohr des Schweißbrenners wird im Laufe des Schweißprozesses stark beansprucht. Einerseits spricht man davon, dass das Kontaktrohr "ausläuft", da durch die Reibung des Schweißdrahtes, einer Funkenerosion oder durch Sekundär-Lichtbögen in der Innenbohrung des Kontaktrohres der Durchmesser größer wird. Dies rührt durch eine mechanische Beanspruchung der Innenbohrung des üblicherweise aus gut leitendem Material, insbesondere aus Kupfer bestehenden Kontaktrohres her. Als Folge dessen wird die Kontaktierung des Schweißdrahtes im Laufe der Zeit immer schlechter und der Schweißprozess instabil. Es kann zur Bildung von Sekundär-Lichtbögen kommen, welche das Kontaktrohr noch mehr beanspruchen und dessen Lebensdauer reduzieren. Das "Auslaufen" des Kontaktrohres wird durch Partikel am Schweißdraht, welche mit diesem mitgeführt werden, verstärkt.

Ein weiteres Problem stellt das so genannte "Zuwachsen" des Kontaktrohres dar. Dabei lagert sich der durch die Förderung des Schweißdrahtes entstehende Abrieb in der Innenbohrung des Kontaktrohres ab und verringert sukzessive den Durchmesser der Bohrung des Kontaktrohres. Dem "Zuwachsen" der Innenbohrung des Kontaktrohres wird gegebenenfalls durch eine Erhöhung der Kraft, mit welcher der Schweißdraht gefördert wird, entgegengewirkt, was sich jedoch negativ auf die Qualität der Schweißnaht auswirkt und zusätzlichen Abrieb verursacht und somit das weitere "Zuwachsen" der Innenbohrung des Kontaktrohres beschleunigt.

Das Kontaktrohr stellt somit einen Verschleißteil des Schweißbrenners dar, der in relativ kurzen Zeitintervallen ausgetauscht werden muss. Zur Demontage des verschlissenen Kontaktrohres und Montage eines neuen Kontaktrohres muss die Schweißanlage abgestellt werden, wodurch diese nicht für die Produktion zur Verfügung steht. Es ist daher insbesondere bei Roboterschweißanlagen eines der obersten Ziele, eine möglichst hohe Lebensdauer der Kontaktrohre und möglichst große Intervalle zwischen dem Tausch der Kontaktrohre zu erreichen.

Die Aufgabe der vorliegenden Erfindung besteht daher in der Schaffung eines oben genannten Reinigungsverfahrens, durch welches die Kontaktrohre länger eingesetzt werden können. Das Verfahren soll möglichst einfach und rasch durchführbar sein und den Schweißprozess möglichst wenig beeinflussen. Schließlich soll das Reinigungsverfahren möglichst kostengünstig und möglichst einfach durchführbar sein.

Eine weitere Aufgabe der vorliegenden Erfindung besteht in der Schaffung einer oben genannten Schweißanlage, mit der die Einsatzzeit der Kontaktrohre gegenüber herkömmlichen Schweißanlagen erhöht werden kann.

Gelöst wird die erfindungsgemäße Aufgabe in verfahrensmäßiger Hinsicht dadurch, dass der Schweißdraht zumindest einmal soweit in Richtung Drahtrolle zurückbewegt wird, bis das Ende des Schweißdrahtes innerhalb des Kontaktrohres liegt und dass der Schweißdraht danach wieder vorwärts bewegt wird. Das Reinigungsverfahren zeichnet sich durch zumindest eine Rückbewegung des Schweißdrahtes und anschließende Vorwärtsbewegung aus, wobei die Rückbewegung gegenüber prozessbedingten Rückwärtsbewegungen des Schweißdrahtes wesentlich weiter, d.h. zumindest bis innerhalb des Kontaktrohres, reicht. Durch diese Rückbewegung des Schweißdrahtes wird der sich im Inneren des Kontaktrohres ansammelnde Abrieb gelöst und teilweise mitgerissen und hinter das Kontaktrohr befördert, wobei bei der anschließenden Vorwärtsbewegung der gelöste Abrieb durch den Schweißdraht über die Innenbohrung des Kontaktrohres nach außen gefördert wird. Die Rück- und anschließende Vorwärtsbewegung des Schweißdrahtes kann durch eine entsprechende Steuerung der Drahtfördervorrichtung besonders einfach auch bei bestehenden Schweißanlagen implementiert werden. Je nach Verschmutzungsgrad des Kontaktrohres können mehrere Rück-/Vorbewegungen des Schweißdrahtes zur Reinigung des Kontaktrohres vorgesehen werden. Da die Rück- und Vorwärtsbewegung des Schweißdrahtes zum Zwecke der Reinigung des Kontaktrohres besonders rasch erfolgen kann, wird der Schweißprozess nur unwesentlich dadurch beeinflusst.

Bei der letzten Vorwärtsbewegung des Schweißdrahtes wird dieser vorzugsweise wieder in die Ausgangslage bewegt und der Schweißprozess von dieser Position des Schweißdrahtes entsprechend fortgesetzt.

Gemäß einem weiteren Merkmal der Erfindung ist vorgesehen, dass der Schweißdraht zumindest über die gesamte Länge des Kontakt-rohres zurückbewegt wird. Dadurch können sämtliche am Schweißdraht anhaftende Abriebteile bis hinter das Kontaktrohr befördert und dort durch entsprechende Maßnahmen entfernt werden.

Zu diesen zusätzlichen Maßnahmen zählt beispielsweise das Beströmen des Bereich des Endes des Schweißdrahtes in zurückgezogener Position mit Luft, insbesondere Druckluft. Durch die Luft wird der am Schweißdraht anhaftende, aber auch am Ende des Kontaktrohres sich sammelnde Abrieb abgeblasen und blockiert somit das Kontaktrohr nicht mehr.

Ebenso ist es möglich, den Bereich des Endes des Schweißdrahtes in zurückgezogener Position abzusaugen, wodurch der Abrieb gezielt entfernt und gesammelt werden kann. Bevorzugt wird jedoch über die anschließende Vorwärtsbewegung der Abrieb durch die Innenbohrung des Kontaktrohres vom Inneren des Schweißbrenners nach außen gefördert.

Ein weiterer Vorteil kann dadurch erzielt werden, dass das Ende des Schweißdrahtes vor dem reinigungsbedingten Zurückbewegen angeschmolzen wird. Durch dieses Anschmelzen wird das freie Ende des Schweißdrahtes zu einer Kugelkalotte größeren Durchmessers angeschmolzen, der beim Zurückziehen des Schweißdrahtes als Kolben innerhalb der Innenbohrung des Kontaktrohres wirkt und somit sämtlichen Abrieb aus der Innenbohrung nach hinten befördert bzw. den Abrieb löst, welcher mit der Vorwärtsbewegung des Schweißdrahtes nach außen gefördert wird.

Um zu verhindern, dass die Kugelkalötte zu groß wird und somit ein Zurückbewegen des Schweißdrahtes nicht oder nur mit hohem Kraftaufwand möglich wird, muss das Anschmelzen durch Einprägen eines bestimmten Schweißstroms und bzw. oder einer bestimmten Schweißspannung über eine bestimmte Zeit in Abhängigkeit des Materials des verwendeten Schweißdrahtes, erfolgen. Durch eine Rückbewegung des Schweißdrahtes unmittelbar nach dem Anschmelzen des freien Endes des Schweißdrahtes, kann die entstehende noch warme Kugelkalotte auch noch leichter verformt und somit durch die Innenbohrung des Kontaktrohres gepresst werden.

Neben dem Anschmelzen des Endes des Schweißdrahtes ist es auch möglich, das Ende des Schweißdrahtes vor dem reinigungsbedingten Zurückbewegen mechanisch zu verformen und dadurch eine bessere Reinigungswirkung zu erzielen.

Diese mechanische Verformung kann beispielsweise dadurch erzielt werden, dass das Ende des Schweißdrahtes vor dem reinigungsbedingten Zurückbewegen abgeschnitten wird. Dadurch entstehen am Ende des Schweißdrahtes scharfe Kanten, durch welche der Abrieb in der Innenbohrung des Kontaktrohres gut gelöst und nach außen gefördert wird.

Zur Erzielung einer besseren Reinigungswirkung kann der Schweißdraht mehrfach soweit zurückbewegt werden, bis das freie Ende des Schweißdrahtes zumindest innerhalb des Kontaktrohres liegt und wieder vorwärts bewegt werden kann. Die Anzahl der Rück-/Vorbewegungen kann an den Grad der Verschmutzung des Kontaktrohres angepasst werden. Die Reinigung des Kontaktrohres kann routinemäßig beispielsweise zu Beginn jedes Schweißprozesses erfolgen.

Ebenso ist es möglich, dass am Ende jedes Schweißprozesses der Schweißdraht zumindest einmal zurück und vorwärts bewegt wird, um das Kontaktrohr entsprechend zu reinigen.

Die reinigungsbedingte Rück-/Vorbwegung des Schweißdrahtes kann aber auch während des Schweißprozesses erfolgen.

Dabei kann die Rück-/Vorbewegung des Schweißdrahtes in Abhängigkeit des gemessenen Schweißstromes und bzw. oder der gemessenen Schweißspannung erfolgen. Aus dem Schweißstrom und bzw. oder der Schweißspannung kann die Abnützung des Kontaktrohres ermittelt und dementsprechend eine Reinigung durch die erfindungsgemäße Rück- und Vorbewegung vorgenommen werden.

Die Reinigung des Kontaktrohres durch eine Rück- und Vorbewegung des Schweißdrahtes kann auch in Abhängigkeit des gemessenen Stromes und bzw. oder der Spannung der Drahtfördervorrichtung erfolgen, da über den Strom oder die Spannung der Drahtfördervorrichtung der Grad des "Zuwachsens" des Kontaktrohres ermittelt oder zumindest abgeschätzt werden kann. Je mehr die Innenbohrung des Kontaktrohres durch Abrieb des Schweißdrahtes zuwächst, desto größer ist der erforderliche Strom für die Förderung des Schweißdrahtes durch die Innenbohrung des Kontaktrohres, so dass bei Überschreiten eines Sollwerts der Reinigungsprozess, also die Rückbewegung des Schweißdrahtes, innerhalb des Kontaktrohres und die anschließende Vorwärtsbewegung des Schweißdrahtes in die Ausgangslage durchgeführt wird.

Ebenso ist es möglich, die Rück- und Vorwärtsbewegung des Schweißdrahtes zum Zwecke der Reinigung des Kontaktrohres nach einer fest vorgegebenen Anzahl prozessbedingter Vor-/Rückbewegungen des Schweißdrahtes vorzunehmen.

Die Rück-/Vorbewegung des Schweißdrahtes kann in einer eigenen Reinigungsstation erfolgen, in welche der Schweißbrenner vor der Reinigung positioniert wird. Dadurch wird zwar die erforderliche Zeit zur Vornahme der Reinigung des Kontaktrohres erhöht, es können jedoch zusätzliche Maßnahmen, welche in der Reinigungsstation vorhanden sind, wie z.B. Druckluft oder Absaugeinrichtungen ausgenützt werden. Diese Maßnahme eignet sich insbesondere bei Roboterschweißanlagen, welche entsprechend programmiert werden können.

Gelöst wird die zweite erfindungsgemäße Aufgabe auch durch eine oben genannte Schweißanlage, bei der eine Vorrichtung zur Steuerung der Drahtfördervorrichtung zur zumindest einmaligen Rückbewegung des Schweißdrahtes bis das Ende des Schweißdrahtes Zumindest innerhalb der Länge des Kontaktrohres liegt und zur anschließenden Vorwärtsbewegung zum Zwecke der Reinigung des Kontaktrohres vorgesehen ist. Dabei kann die entsprechende Steuerungsvorrichtung extra für den Reinigungszweck vorgesehen werden oder durch entsprechende Umprogrammierung der ohnedies für die Förderung des Schweißdrahtes vorhandenen Steuerungseinrichtung gebildet sein. Der Aufwand zum Nachrüsten einer derartigen Schweißanlage ist besonders gering.

Gemäß einem weiteren Merkmal der Erfindung kann eine Einrichtung zur Beströmung des Schweißbrenners mit Luft während der reinigungsbedingten Rück-/Vorbewegung des Schweißdrahtes vorgesehen sein. Durch die Beströmungseinrichtung kann der dem Schweißdraht anhaftende Abrieb abgeblasen werden. Hierbei kann zusätzlich zu dem Reinigungsprozess mit Hilfe des Schweißdrahtes das Ausblasen über das für den Schweißprozess notwendige Schutzgas erfolgen bzw. unterstützt werden.

Weiters kann eine Einrichtung zur Absaugung des Schweißbrenners während der reinigungsbedingten Rück-/Vorbewegung des Schweißdrahtes vorgesehen sein. Dadurch kann der am Schweißdraht anhaftende Abrieb gezielt abgeführt werden.

Um die Reinigung des Kontaktrohres durch eine Rück-/Vorbewegung des Schweißdrahtes bis innerhalb des Kontaktrohres noch zu verbessern, kann eine Vorrichtung zum Anschmelzen des freien Endes des Schweißdrahtes vorgesehen sein. Diese Anschmelzeinrichtung kann durch eine eigene, beispielsweise in einer entsprechenden Reinigungsstation, vorgesehene Einrichtung realisiert sein oder lediglich durch kurzzeitiges Erhöhen des Schweißstromes und bzw. oder der Schweißspannung erfolgen.

Weiters ist von Vorteil, wenn eine Vorrichtung zur mechanischen Bearbeitung, insbesondere Beschneidung des freien Endes des Schweißdrahtes vor der reinigungsbedingten Rück-/Vorbewegung vorgesehen ist.

Gemäß einem weiteren Merkmal der Erfindung ist vorgesehen, dass die Einrichtung zur Steuerung der Drahtfördervorrichtung mit einer Einrichtung zur Messung des Schweißstromes und bzw. oder der Schweißspannung verbunden ist. Dadurch kann die reinigungsbedingte Rück-/Vorbewegung des Schweißdrahtes in Abhängigkeit des ermittelten Schweißstromes und bzw. oder der Schweißspannung erfolgen. Durch die Verschmutzung des Kontaktrohres kommt es nämlich zu einer Arbeitspunktverschiebung, die von der Steuervorrichtung erkannt wird, so dass bei zu großer Verschmutzung der Reinigungsprozess eingeleitet werden kann.

Darüber hinaus oder zusätzlich kann die Einrichtung zur Steuerung der Drahtfördervorrichtung auch mit einer Einrichtung zur Messung des Stromes und bzw. oder der Spannung der Drahtfördervorrichtung verbunden sein. Dadurch kann eine Reinigung des Schweißdrahtes in Abhängigkeit des Stromes und bzw. oder der Spannung der Drahtfördervorrichtung, welche vom Zuwachsen des Kontaktrohres abhängig ist, erfolgen.

Gemäß einem weiteren Merkmal der Erfindung ist am Kontaktrohr zumindest eine radiale Öffnung vorgesehen. Durch diese radiale Öffnung am Kontaktrohr kann der am Schweißdraht anhaftende Abrieb während der reinigungsbedingten Rückbewegung des Schweißdrahtes zusätzlich abgeführt werden.

Dabei ist die zumindest eine radiale Öffnung vorteilhafterweise an jenem Ende des Kontaktrohres angeordnet, welches der Austrittsöffnung des Schweißdrahtes gegenüberliegt. An diesem Ende des Kontaktrohres sammelt sich üblicherweise der meiste Abrieb an.

Vorteilhafterweise sind mehrere, über den Umfang verteilte Öffnungen am Kontaktrohr vorgesehen, über welche der Abrieb abgeführt werden kann. Durch entsprechende Verbindung dieser Öffnungen, beispielsweise mit einer Absaugeinrichtung, kann der Abrieb noch wirkungsvoller entfernt werden.

Die vorliegende Erfindung wird anhand der beigefügten Zeichnungen näher erläutert. Darin zeigen:
- Fig. 1: eine schematische Darstellung einer Schweißanlage;
- Fig. 2: eine Explosionsdarstellung eines Schweißbrenners mit Kon- taktrohr;
- Fig. 3: eine vergrößerte Darstellung eines in einem Schweißbren- ner angeordneten Kontaktrohres in geschnittener Darstel- lung;
- Fig. 4: das Kontaktrohr gemäß Fig. 3 bei reinigungsbedingt zu- rückgezogenem Schweißdraht;
- Fig. 5: das Kontaktrohr gemäß Fig. 4 bei reinigungsbedingt vorbe- wegtem Schweißdraht;
- Fig. 6: der zeitliche Verlauf der Geschwindigkeit der Drahtförde- rung während eines erfindungsgemäßen Reinigungsvorganges;
- Fig. 7: die schematische Darstellung der Position des Schweiß- drahtes in Bezug auf das Werkstück in Abhängigkeit der Zeit anhand des Beispiels gemäß Fig. 5; und
- Fig. 8: ein Schnittbild einer Ausführungsform eines Kontaktroh- res.

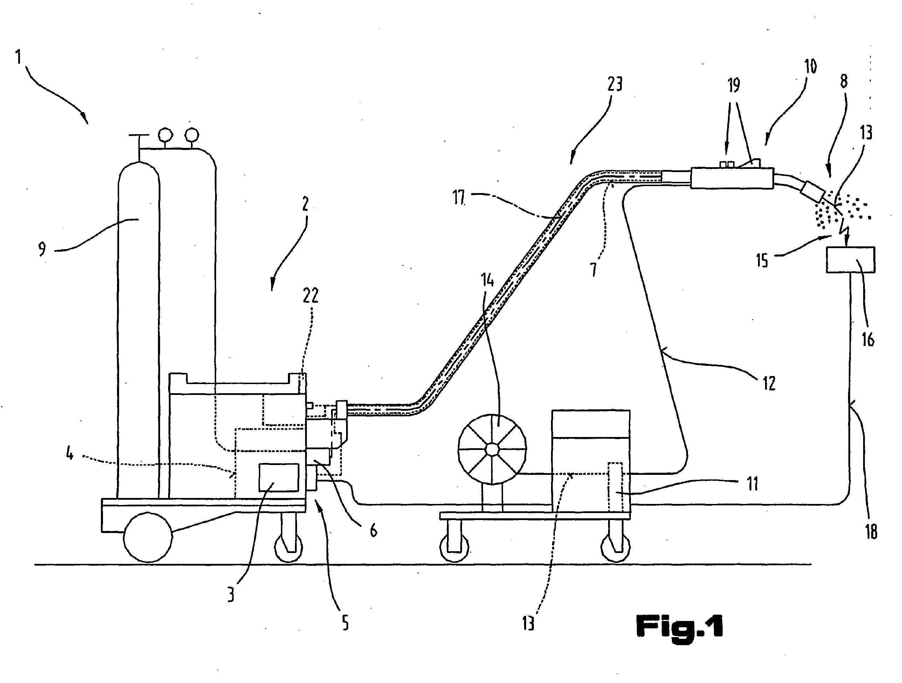

In Fig. 1 ist eine Schweißanlage 1 für verschiedenste Schweißprozesse, wie z.B. MIG/MAG-Schweißen bzw. WIG/TIG-Schweißen oder Elektroden-Schweißen, Doppeldraht/Tandem-Schweißen usw., gezeigt.

Die Schweißanlage 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Schutzgas 8, wie beispielsweise CO₂, Helium oder Argon, zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Drahtrolle 14 in den Bereich des Schweißbrenners 10 zugeführt wird. Das Drahtvorschubgerät 11 kann als Zusatzeinrichtung ausgebildet oder auch in der Schweißanlage 1 integriert sein.

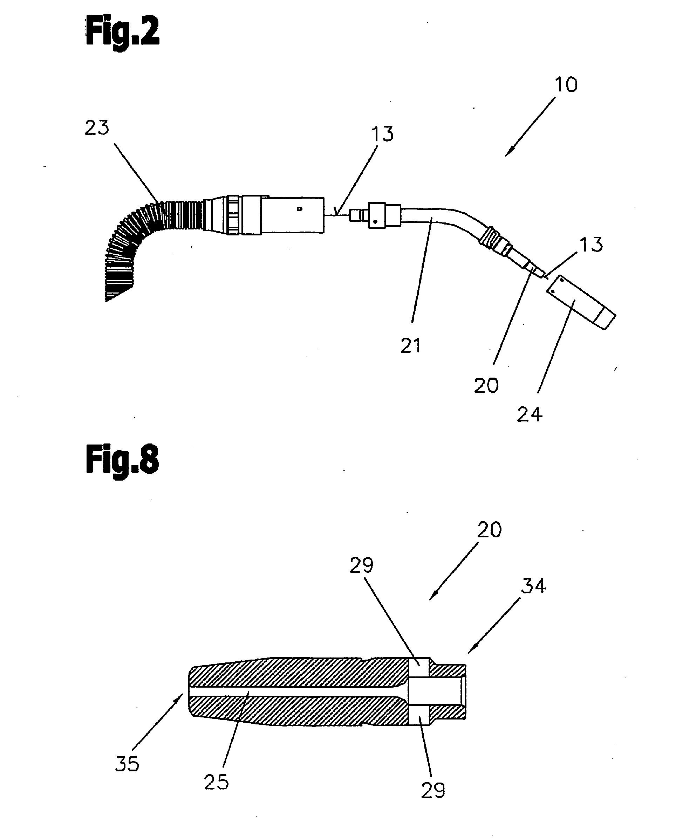

Der Strom zum Aufbauen eines Lichtbogens 15 zwischen dem Schweißdraht 13 und dem zu verschweißenden Werkstück 16 wird über eine Schweißleitung 17 vom Leistungsteil 3 der Stromquelle 2 einem im Schweißbrenner 10 angeordneten Kontaktrohr 20 (s. Fig. 2) zugeführt, wobei das zu verschweißende Werkstück 16 über eine weitere Schweißleitung 18 ebenfalls mit der Stromquelle 2 verbunden ist. Am Schweißbrenner 10 können verschiedene Bedienungselemente 19 zur Einstellung verschiedener Schweißparameter angeordnet sein.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage 1 angesteuert bzw. entsprechende Sollwerte für die Regelung oder Steuerung vorgegeben. Der Schweißbrenner 10 wird über ein Schlauchpaket 23, in dem die einzelnen Leitungen angeordnet sind, mit der Schweißanlage 1 verbunden.

Fig. 2 zeigt eine Explosionsdarstellung eines Schweißbrenners 10. Der Schweißbrenner 10 umfasst einen Rohrbogen 21, an dem das Kontaktrohr 20 befestigt wird. Über dem Kontaktrohr 20 wird die Gasdüse 24 angeordnet. Der Schweißbrenner 10 wird über das Schlauchpaket 23 mit entsprechenden Leitungen verbunden. Der Schweißdraht 13 kann ebenfalls über das Schlauchpaket 23 zur Kontaktrohr 20 des Schweißbrenners 10 geführt werden.

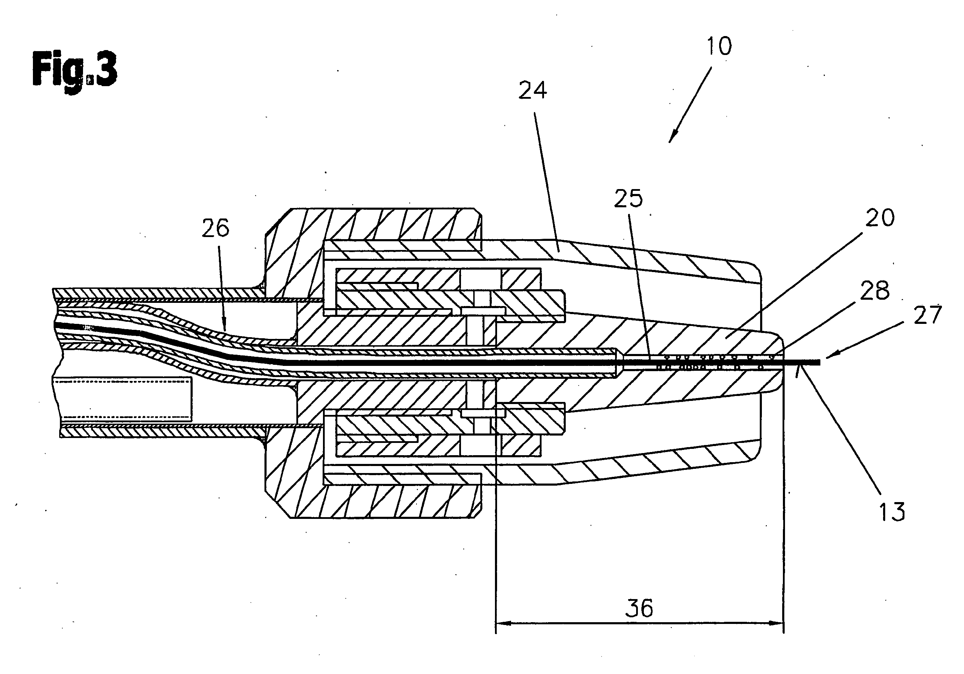

Fig. 3 zeigt ein Schnittbild durch ein in einem Schweißbrenner 10 angeordnetes Kontaktrohr 20 in vergrößerter Darstellung. Das Kontaktrohr 20 weist eine Innenbohrung 25 auf, die einen geringfügig größeren Durchmesser als der verwendete Schweißdraht 13 besitzt. Der Schweißdraht 13 wird beispielsweise über einen Schlauch 26 an das Kontaktrohr 20 herangeführt. Das Ende 27 des Schweißdrahtes 13 steht über eine bestimmte Länge, das ist die so genannte Stickout-Länge, aus dem Kontaktrohr 20 heraus. Diese freie Drahtlänge beträgt üblicherweise 10 bis 25 mm. Durch die Bewegung des Schweißdrahtes 13 wird auch Abrieb 28 in das Kontaktrohr 20 befördert, wo sie zu einem allmählichen Zuwachsen der Innenbohrung 25 führt, wie dies schematisch in der Innenbohrung 25 dargestellt wurde.

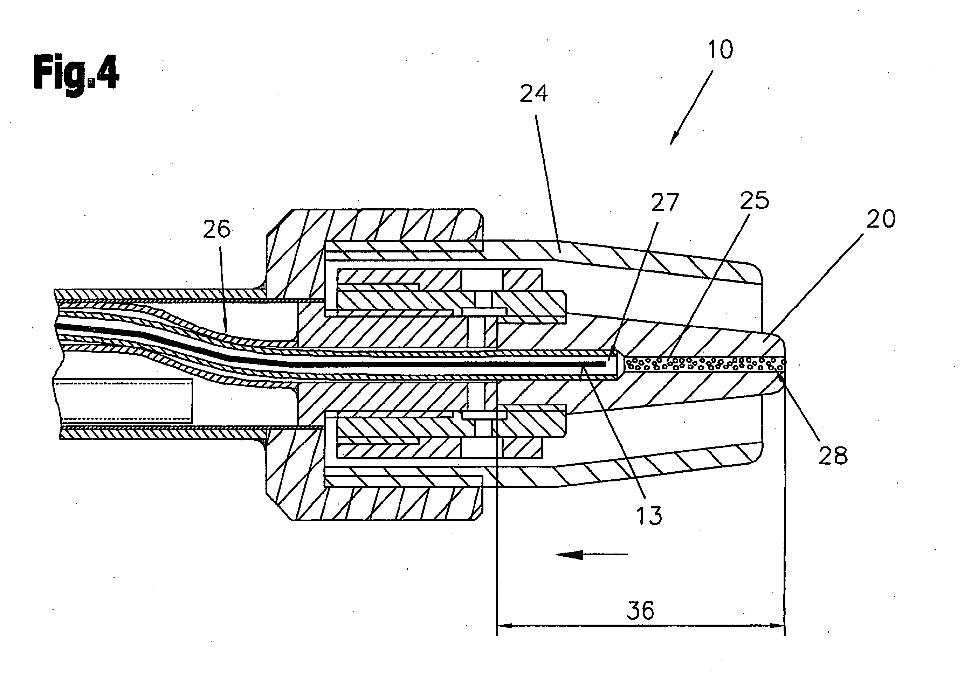

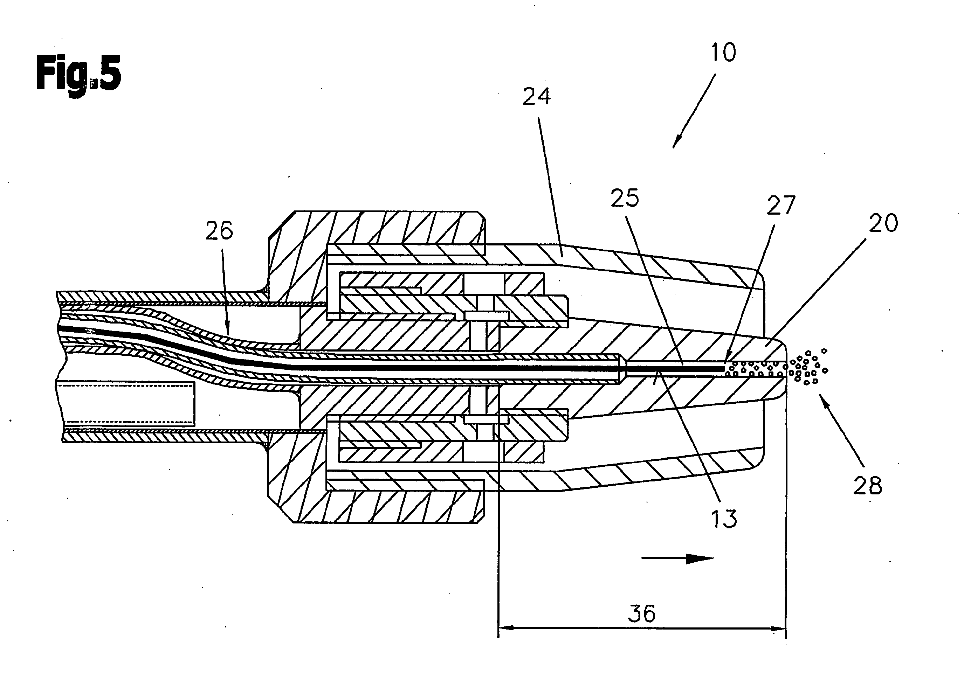

Wie in den Fig. 4 und 5 ersichtlich, wird erfindungsgemäß der Schweißdraht 13 zurück, d.h. vom Werkstück 16 weg, bewegt bis das Ende 27 des Schweißdrahts 13 zumindest innerhalb des Kontaktrohres 20, also in dem Schlauch 26 (Fig. 4) liegt. Der Schweißdraht 13 kann auch über die gesamte Länge 36 des Kontaktrohres 20 zurückbewegt werden. Durch die Rück-/Vorbewegung des Schweißdrahtes 13, wie aus den Fig. 4 und 5 ersichtlich, wird der Abrieb 28 gelöst und mitgerissen und fällt aus dem Kontaktrohr 20 heraus bzw. kann durch entsprechende Maßnahmen, wie z.B. Beblasen oder Absaugen gezielt abtransportiert werden. Bei der Rückwärtsbewegung des Schweißdrahtes 13 wird der Abrieb gelöst und durch die anschließende Vorwärtsbewegung des Schweißdrahtes 13 über diesen durch die Innenbohrung 25 nach außen geschoben. Auf diese Weise wird das Zuwachsen der Innenbohrung 25 des Kontaktrohres 20 verlangsamt und die Lebensdauer des Kontaktrohres 20 erhöht. Somit muss der Schweißprozess nicht so häufig unterbrochen und das Kontaktrohr 20 gewechselt werden. Nach der Rückbewegung des Schweißdrahtes 13 wird dieser entweder in die ursprüngliche Ausgangsposition in Richtung Werkstück 16 vorbewegt und der Schweißprozess fortgesetzt oder zumindest teilweise vorbewegt und erneut ein- oder mehrfach zurückbewegt. Durch zusätzliche Maßnahmen wie z.B. Öffnungen 29 im Kontaktrohr 20, kann das Entfernen des Abriebs 28 unterstützt werden (s. Fig. 8).

Selbstverständlich ist es möglich, dass der Schweißdraht 13 nicht vollständig aus dem Kontaktrohr 20 zurückgefördert wird, sondern nur teilweise in die Innenbohrung 25 des Kontaktrohres 20 zurückbewegt wird und anschließend wieder in Richtung des Werkstücks 16 nach vorne geschoben wird. Auch ist es möglich, dass der Reinigungsprozess aus mehreren aufeinanderfolgenden Zyklen gebildet wird, so dass beispielsweise der Schweißdraht 13 zuerst nur in das Kontaktrohr 20 zurückgefördert wird, anschließend wieder nach vor gefördert wird, worauf beispielsweise im nächsten Zyklus der Schweißdraht 13 ganz nach hinten, also in den Schlauch 26, gefördert wird und von diesem wieder nach vor gefördert wird. Diese Abstufung der Rückbewegung kann jedoch noch feiner unterteilt werden. Somit wird praktisch eine stückweise Reinigung des Kontaktrohres 20 erzielt.

Ein wesentlicher Vorteil liegt darin, dass die Reinigung des Kontaktrohres 20 vom Abrieb 28 durch die Rück-/Vorbewegung des Schweißdrahtes 13 in das Innere des Kontaktrohres 20 stromlos erfolgt, so dass es zu keinen Sekundär-Lichtbögen und zu keinem Festbrennen des Schweißdrahtes 13 im Kontaktrohr 20 kommen kann. Weiters ist es auch möglich, dass der Reinigungsprozess nach einem Schweißprozess durchgeführt wird, wobei hierzu beispielsweise nach Beenden des Schweißprozesses und vor der Einleitung des Reinigungsprozesses ein Zeitglied gestartet wird, so dass eine entsprechende Abkühlung des Schweißdrahtes 13 garantiert wird, und erst nach Ablauf einer bestimmten Zeitdauer der Reinigungsprozess gestartet wird.

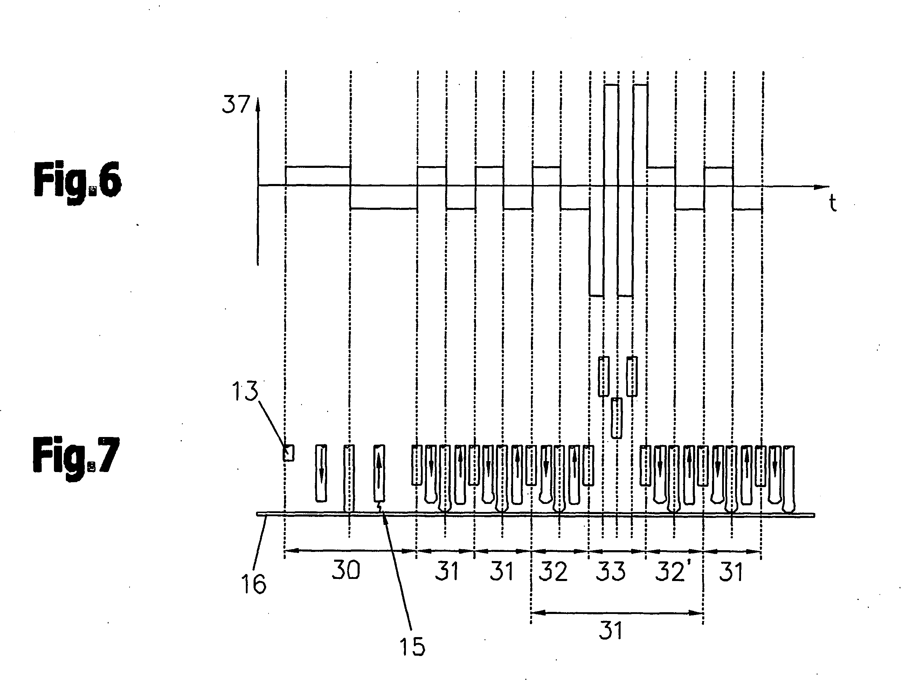

Die Fig. 6 und 7 zeigen zeitliche Verlaufsdiagramme der Drahtfördergeschwindigkeit 37 und der Position des Schweißdrahtes 13 in Bezug auf das Werkstück 16 schematisch dargestellt. Während einer Startphase 30, welche dazu dient den Lichtbogen 15 zu zünden und zu stabilisieren, wird der Schweißdraht 13 in Richtung des Werkstücks 16 vorwärts bewegt und danach unter Anlegen einer entsprechenden Schweißspannung U und eines Schweißstromes I wieder vom Werkstück 16 unter Bildung des Lichtbogens 15 wegbewegt. Nach der Startphase 30 werden entsprechend dem gewünschten Schweißprozess hintereinander mehrere Schweißprozessphasen 31 durchlaufen, während welchen beispielsweise der Schweißdraht 13 in Richtung des Werkstücks 16 und zur Unterstützung der Ablösung des Tropfens wieder vom Werkstück 16 wegbewegt wird, wie dies anhand eines sogenannten CMT-Prozesses (Cold Metal Transfer-Prozesses)dargestellt ist. Selbstverständlich können hierfür auch andere bekannte Schweißprozesse, wie beispielsweise ein Sprühlichtbogen-Prozess, ein Kurzschluss-Prozess, ein Puls-Prozess usw. eingesetzt werden. Der entsprechende Geschwindigkeitsverlauf des Schweißdrahtes 13 während der Schweißprozessphasen 31 ist aus Fig. 5 ersichtlich. Während des Schweißprozesses kann eine Reinigungsphase 33 entsprechend der vorliegenden Erfindung eingeschoben werden, während welcher der Schweißdraht 13 entsprechend schnell und weit vom Werkstück 16 zurückbewegt wird, so dass dieser innerhalb des Kontaktrohres 20 endet bzw. ganz zurückverschoben wird und er somit durch das gesamte Kontakrohr 20 zurück in die Seele, also den Schlauch 26, gezogen wird. Anschließend wird der Schweißdraht 13 wieder in Richtung des Werkstücks 16 vorbewegt und erneut zurück und wieder vor in die Ausgangsposition bewegt. Die Reinigungsphase 33 erfolgt während einer Schweißprozessphase 31, die in zwei Teile 32 und 32' unterteilt wurde. Unter der Voraussetzung einer entsprechend schnellen Rück- und Vorbewegung des Schweißdrahtes 13 kann die Reinigungsphase 33 im Bereich einiger ms betragen, weshalb der eigentliche Schweißprozess durch die Reinigung nicht wesentlich beeinflusst wird. Ebenso ist es möglich, die Reinungsphase 33 zu Beginn des Schweißprozesses oder am Ende bzw. in Abhängigkeit des Schweißstromes I und bzw. der Schweißspannung U oder in Abhängigkeit des Stromes bzw. der Spannung der Drahtfördervorrichtung erfolgen.

Fig. 8 zeigt eine Ausführungsform eines Kontaktrohres 20, welches zumindest eine radiale Bohrung 29 an jenem Ende 34 aufweist, welches der Austrittsöffnung35 des Schweißdrahtes 13 gegenüberliegt. Durch diese radiale Bohrung 29 kann der Abrieb 28 des Schweißdrahtes 13 während der Rückbewegung des Schweißdrahtes 13 besser abgeführt werden. Unter Umständen kann der Abtransport des Abriebs 28 mit Hilfe von Druckluft oder durch Absaugeinrichtungen verbessert werden (nicht dargestellt). Hierbei ist es auch möglich, dass die Seele, also der Schlauch 26, in welcher der Schweißdraht 13 zum Schweißbrenner 10 gefördert wird, unmittelbar vor der Bohrung 29 endet, so dass der gelöste und zurückgeschobene Abrieb 28 über die Bohrung 29 ausgeblasen werden kann. Bevorzugt wird jedoch der Abrieb 28 durch die Vorwärtsbewegung des Schweißdrahtes 13 aus dem Inneren des Kontaktrohres 20 geschoben.

Es ist aber auch möglich, dass der Reinigungsprozess automatisch eingeleitet werden kann, d.h. dass von der Steuervorrichtung durch Auswertung des Stromes und bzw. oder der Spannung ein Verschmutzungsgrad festgestellt wird und entsprechend ein Reinigungsprozess eingeleitet wird oder nicht, d.h. dass im Laufe eines Schweißprozesses bedingt durch die Abnützung des Kontaktrohres von einem Normwert ausgehend sich verändert. Bei Erreichen eines bestimmten Schwellwertes wird ein unzulässig hoher Verschleiß des Kontaktrohres 20 angezeigt und diese beispielsweise mit dem erfindungsgemäßen Verfahren gereinigt. Nach der Reinigung des Kontaktrohres 20 ist der Schweißstrom im Idealfall wieder so groß wie der gewünschte Normwert.

Es ist aber auch möglich, die Verschmutzung des Kontaktrohres 20 über andere Parameter, insbesondere über den Motorstrom für die Drahtförderung festzustellen. Hierzu wird der Motorstrom eines Drahtvorschubgeräts erfasst, welcher mit einem bestimmten Normwert beginnt und durch das Zuwachsen des Kontaktrohres bedingt steigt, bis ein unzulässig hoher Schwellwert erreicht wird. Zu diesem Zeitpunkt wird das erfindungsgemäße Reinigungsverfahren angewandt und es kann der Motorstrom wieder idealerweise auf den Normwert abgesenkt werden. Nach neuerlichem Erreichen des Schwellwerts wird ein weiterer Reinigungsschritt eingeschoben. Die Reinigung kann aber auch standardmäßig zu Beginn und am Ende jedes Schweißprozesses oder nach Erreichen einer bestimmten Anzahl von Schweißprozessphasen oder nach einer vorbestimmten Betriebsdauer vorgenommen werden.

Auch ist es möglich, dass der Reinigungsprozess nicht durch eine kontinuierliche Rück-/Vorbewegung des Schweißdrahtes 13 durchgeführt wird, sondern dass der Schweißdraht 13 eine sogenannte Zitterbwegung in der Vorwärtsbewegung und/oder Rückwärtsbewegung durchführt. Beispielsweise kann der Schweißdraht 13 während der Vorwärtsbewegung aus dem Kontaktrohr 20 2 mm vorgeschoben werden und anschließend 1 mm wieder zurückgeschoben werden. Diese Bewegung wird solange fortgeführt, bis der Schweißdraht 13 bzw. dessen Ende aus dem Kontaktrohr 20 gefördert wurde. Selbstverständlich kann der Reinigungsprozess auch bei Handschweißbrennern eingesetzt werden.

## Patentansprüche

1. Verfahren zur Reinigung eines Kontaktrohres (20) eines Schweißbrenners (10), über das ein von einer Drahtrolle (14) oder einem Drahtfass über eine Drahtfördervorrichtung (11) zum Schweißbrenner (10) bewegter Schweißdraht (13) mit elektrischer Energie versorgt wird, **dadurch gekennzeichnet, dass** der Schweißdraht (13) zumindest ein Mal soweit in Richtung Drahtrolle (14) oder Drahtfass zurück bewegt wird, bis das Ende (27) des Schweißdrahtes (13) zumindest innerhalb der Länge (36) des Kontaktrohres (20) liegt, und dass der Schweißdraht (13) danach wieder vorwärts bewegt wird.

2. Reinigungsverfahren nach Anspruch 1, **dadurch gekennzeichnet, dass** der Schweißdraht (13) bei der letzten Vorwärtsbewegung wieder in die Ausgangslage bewegt wird.

3. Reinigungsverfahren nach Anspruch 1 oder 2, **dadurch gekennzeichnet, dass** der Schweißdraht (13) zumindest über die gesamte Länge (36) des Kontaktrohres (20) zurück bewegt wird.

4. Reinigungsverfahren nach einem der Ansprüche 1 bis 3, **dadurch gekennzeichnet, dass** der Bereich des Endes (27) des Schweißdrahtes (13) in zurückgezogener Position mit Luft beströmt wird.

5. Reinigungsverfahren nach einem der Ansprüche 1 bis 3, **dadurch gekennzeichnet, dass** der Bereich des Endes (27) des Schweißdrahtes (13) in zurückgezogener Position abgesaugt wird.

6. Reinigungsverfahren nach einem der Ansprüche 1 bis 4, **dadurch gekennzeichnet, dass** das Ende (27) des Schweißdrahtes (13) vor dem reinigungsbedingten Zurückbewegen angeschmolzen wird.

7. Reinigungsverfahren nach Anspruch 6, **dadurch gekennzeichnet, dass** das Ende (27) des Schweißdrahtes (13) durch Einprägen eines bestimmten Schweißstromes und bzw. oder einer bestimmten Schweißspannung über eine bestimmte Zeit in Abhängigkeit des Materials des verwendeten Schweißdrahtes (13) angeschmolzen wird.

8. Reinigungsverfahren nach einem der Ansprüche 1 bis 7, **dadurch gekennzeichnet, dass** das Ende (27) des Schweißdrahtes (13) vor dem reinigungsbedingten Zurückbewegen mechanisch verformt wird.

9. Reinigungsverfahren nach Anspruch 8, **dadurch gekennzeichnet, dass** das Ende (27) des Schweißdrahtes (13) vor dem reinigungsbedingten Zurückbewegen abgeschnitten wird.

10. Reinigungsverfahren nach einem der Ansprüche 1 bis 9, **dadurch gekennzeichnet, dass** der Schweißdraht (13) mehrfach soweit zurück bewegt wird, bis das Ende (27) des Schweißdrahtes (13) zumindest innerhalb der Länge (36) des Kontaktrohres (20) liegt und wieder vorwärts bewegt wird.

11. Reinigungsverfahren nach einem der Ansprüche 1 bis 10, **dadurch gekennzeichnet, dass** der Schweißdraht (13) zu Beginn eines Schweißprozesses zumindest einmal zurück und vorwärts bewegt wird.

12. Reinigungsverfahren nach einem der Ansprüche 1 bis 11, **dadurch gekennzeichnet, dass** der Schweißdraht (13) am Ende eines Schweißprozesses zumindest einmal zurück und vorwärts bewegt wird.

13. Reinigungsverfahren nach einem der Ansprüche 1 bis 12, **dadurch gekennzeichnet, dass** der Schweißdraht (13) während eines Schweißprozesses zumindest einmal zurück und wieder vorwärts bewegt wird.

14. Reinigungsverfahren nach Anspruch 13, **dadurch gekennzeichnet, dass** der Schweißdraht (13) in Abhängigkeit des gemessenen Schweißstromes und bzw. oder der gemessenen Schweißspannung zurück und wieder vorwärts bewegt wird.

15. Reinigungsverfahren nach Anspruch 13, **dadurch gekennzeichnet, dass** der Schweißdraht (13) in Abhängigkeit des gemessenen Stromes oder der Spannung der Drahtfördervorrichtung (14) des Schweißdrahtes (13) zurück und wieder vorwärts bewegt wird.

16. Reinigungsverfahren nach Anspruch 13, **dadurch gekennzeichnet, dass** der Schweißdraht (13) nach einer fest vorgegebenen Anzahl prozessbedingter Vor-/Rückbewegungen des Schweißdrahtes (13) zumindest einmal zurück und wieder vorwärts bewegt wird.

17. Reinigungsverfahren nach einem der Ansprüche 1 bis 16, **dadurch gekennzeichnet, dass** der Schweißbrenner (10) in einer Reinigungsstation positioniert wird und in dieser der Schweißdraht (13) zumindest ein Mal zurück und wieder vorwärts bewegt wird.

18. Schweißanlage (1) mit einer Stromquelle (2) und einem Schweißbrenner (10) mit Kontaktrohr (20) zur Versorgung eines von einer Drahtrolle (14) über eine Drahtfördervorrichtung (11) zum Schweißbrenner (10) bewegten Schweißdrahtes (13) mit elektrischer Energie, **dadurch gekennzeichnet, dass** eine Vorrichtung (4) zur Steuerung der Drahtfördervorrichtung (11) zur zumindest einmaligen Rückbewegung des Schweißdrahtes (13) bis das Ende des Schweißdrahtes (13) zumindest innerhalb der Länge (36) des Kontaktrohres (20) liegt und zur anschließenden Vorwärtsbewegung zum Zwecke der Reinigung des Kontaktrohres (20) vorgesehen ist.

19. Schweißanlage (1) nach Anspruch 18, **dadurch gekennzeichnet, dass** eine Einrichtung zur Beströmung des Schweißbrenners (10) mit Luft während der reinigungsbedingten Rück-/Vorbewegung des Schweißdrahtes (13) vorgesehen ist.

20. Schweißanlage (1) nach Anspruch 18 oder 19, **dadurch gekennzeichnet, dass** eine Einrichtung zur Absaugung des Schweißbrenners (10) während der reinigungsbedingten Rück-/Vorbewegung des Schweißdrahtes (13) vorgesehen ist.

21. Schweißanlage (1) nach einem der Ansprüche 18 bis 20, **dadurch gekennzeichnet, dass** eine Einrichtung zum Anschmelzen des Endes (27) des Schweißdrahtes (13) vor der reinigungsbedingten Rück-/Vorbewegung des Schweißdrahtes (13) vorgesehen ist.

22. Schweißanlage (1) nach einem der Ansprüche 18 bis 21, **dadurch gekennzeichnet, dass** eine Einrichtung zur mechanischen Bearbeitung, insbesondere Beschneidung, des Endes (27) des Schweißdrahtes (13) vor der reinigungsbedingten Rück-/Vorbewegung des Schweißdrahtes (13) vorgesehen ist.

23. Schweißanlage (1) nach einem der Ansprüche 18 bis 22, **dadurch gekennzeichnet, dass** die Vorrichtung (4) zur Steuerung der Drahtfördervorrichtung (11) mit einer Einrichtung zur Messung des Schweißstromes und bzw. oder der Schweißspannung verbunden ist.

24. Schweißanlage (1) nach einem der Ansprüche 18 bis 23, **dadurch gekennzeichnet, dass** die Vorrichtung (4) zur Steuerung der Drahtfördervorrichtung (11) mit einer Einrichtung zur Messung des Stromes und bzw. oder der Spannung der Drahtfördervorrichtung (11) verbunden ist.

25. Schweißanlage (1) nach einem der Ansprüche 18 bis 24, **dadurch gekennzeichnet, dass** am Kontaktrohr (20) zumindest eine radiale Öffnung (29) vorgesehen ist.

26. Schweißanlage (1) nach Anspruch 25, **dadurch gekennzeichnet, dass** die zumindest eine radiale Öffnung (29) an jenem Ende (34) des Kontaktrohres (20) angeordnet ist, welches der Austrittsöffnung (25) des Schweißdrahtes (13) gegenüberliegt.

27. Schweißanlage (1) nach Anspruch 25 oder 26, **dadurch gekennzeichnet, dass** am Kontaktrohr (20) mehrere, über den Umfang verteilte, Öffnungen (29) vorgesehen sind.

## Claims

1. A method for cleaning a contact tube (20) of a welding torch (10), via which contact tube a welding wire (13) is supplied with electrical energy, said welding wire being moved towards the welding torch (10) by a wire reel (14) or a welding drum via a wire feeder (11), **characterized in that** the welding wire (13) is at least once moved backwards in the direction of the wire reel (14) or the wire drum until the end (27) of the welding wire (13) is at least within the length (36) of the contact tube (20), and **in that** the welding wire (13) is subsequently again moved forwards.

2. The cleaning method according to claim 1, **characterized in that** the welding wire (13) is moved back into its starting position during the last forward movement.

3. The cleaning method according to claim 1 or 2, **characterized in that** the welding wire (13) is moved backwards at least along the entire length (36) of the contact tube (20).

4. The cleaning method according to any one of claims 1 to 3, **characterized in that** air is caused to flow over the region of the end (27) of the welding wire (13) in its pulled-back position.

5. The cleaning method according to any one of claims 1 to 3, **characterized in that** the region of the end (27) of the welding wire (13) is sucked off in its pulled-back position.

6. The cleaning method according to any one of claims 1 to 4, **characterized in that** the end (27) of the welding wire (13) is melted on before it is moved back for cleaning purposes.

7. The cleaning method according to claim 6, **characterized in that** as a function of the material of the welding wire (13) used, the end (27) of the welding wire (13) is melted on by impressing a certain welding current and/or a certain welding voltage over a certain period of time.

8. The cleaning method according to any one of claims 1 to 7, **characterized in that** the end (27) of the welding wire (13) is deformed mechanically before it is moved backwards for cleaning purposes.

9. The cleaning method according to claim 8, **characterized in that** the end (27) of the welding wire (13) is cut off before it is moved backwards for cleaning purposes.

10. The cleaning method according to any one of claims 1 to 9, **characterized in that** the welding wire (13) is several times moved backwards until the end (27) of the welding wire (13) lies at least within the length (36) of the contact tube (20) and is again moved forwards.

11. The cleaning method according to any one of claims 1 to 10, **characterized in that** at the beginning of a welding process, the welding wire (13) is at least once moved backwards and forwards.

12. The cleaning method according to any one of claims 1 to 11, **characterized in that** at the end of a welding process, the welding wire (13) is at least once moved backwards and forwards.

13. The cleaning method according to any one of claims 1 to 12, **characterized in that** during a welding process, the welding wire (13) is at least once moved backwards and, again, forwards.

14. The cleaning method according to claim 13, **characterized in that** as a function of the welding current and/or the welding voltage measured, the welding wire (13) is moved backwards and, again, forwards.

15. The cleaning method according to claim 13, **characterized in that** as a function of the current or voltage of the wire feeder (11) of the welding wire (13) measured, the latter is moved backwards and, again, forwards.

16. The cleaning method according to claim 13, **characterized in that** the welding wire (13) is at least once moved backwards and, again, forwards corresponding to a fixedly predetermined number of process-required forward/backward movements of the welding wire (13).

17. The cleaning method according to any one of claims 1 to 16, **characterized in that** the welding torch (10) is positioned in a cleaning unit and, therein, the welding wire (13) is at least once moved backwards and, again, forwards.

18. A welding plant (1) with a current source (2) and a welding torch (10) which includes a contact tube (20) for supplying a welding wire (13) with electrical energy, said welding wire being moved towards the welding torch (10) by a wire reel (14) via a wire feeder (11), **characterized in that** a unit (4) for controlling the wire feeder (11) is provided to at least once move backwards the welding wire (13) until the end of the welding wire (13) lies at least within the length (36) of the contact tube (20) and to subsequently move forwards the same for cleaning purposes of the contact tube (20).

19. The welding plant (1) according to claim 18, **characterized in that** a device is provided for causing air to flow over the welding torch (10) during the backward/forward movement of the welding wire (13) effected for cleaning purposes.

20. The welding plant (1) according to claim 18 or 19, **characterized in that** a device is provided for sucking off the welding torch (10) during the backward/forward movement of the welding wire (13) effected for cleaning purposes.

21. The welding plant (1) according to any one of claims 18 to 20, **characterized in that** a device is provided for melting on the end (27) of the welding wire before the welding wire (13) is moved backwards/forwards for cleaning purposes.

22. The welding plant (1) according to any one of claims 18 to 21, **characterized in that** a device is provided for mechanically processing, in particular for cutting off, the end (27) of the welding wire (13) before the welding wire (13) is moved backwards/forwards for cleaning purposes.

23. The welding plant (1) according to any one of claims 18 to 22, **characterized in that** the unit (4) for controlling the wire feeder (11) is connected with a unit for measuring the welding current and/or the welding voltage.

24. The welding plant (1) according to any one of claims 18 to 23, **characterized in that** the unit (4) for controlling the wire feeder (11) is connected with a unit for measuring the current and/or the voltage of the wire feeder (11).

25. The welding plant (1) according to any one of claims 18 to 24, **characterized in that** at least one radial opening (29) is provided on the contact tube (20).

26. The welding plant (1) according to claim 25, **characterized in that** the at least one radial opening (29) is arranged on that end (34) of the contact tube (20) opposing the discharge opening (25) of the welding wire (13).

27. The welding plant (1) according to claim 25 or 26, **characterized in that** several peripherally-distributed openings (29) are provided on the contact tube (20).

## Revendications

1. Procédé de nettoyage d'un tube de contact (20) d'un chalumeau (10), par lequel un fil d'apport (13), déplacé d'un rouleau de fil (14) ou d'un fût de fil, via un dispositif de transport de fil (11), au chalumeau (10), est alimenté en énergie électrique, **caractérisé en ce que** le fil d'apport (13) est déplacé en retrait au moins une fois dans la direction du rouleau de fil (14) ou du fût de fil jusqu'à ce que l'extrémité (27) du fil d'apport (13) se situe au moins dans la longueur (36) du tube de contact (20) et **en ce que** le fil d'apport (13) est ensuite redéplacé en avant.

2. Procédé de nettoyage selon la revendication 1, **caractérisé en ce que** le fil d'apport (13), lors du dernier déplacement en avant, est redéplacé en position de sortie.

3. Procédé de nettoyage selon la revendication 1 ou 2, **caractérisé en ce que** le fil d'apport (13) est déplacé en retrait au moins sur toute la longueur (36) du tube de contact (20).

4. Procédé de nettoyage selon l'une quelconque des revendications 1 à 3, **caractérisé en ce que** la zone de l'extrémité (27) du fil d'apport (13) est alimentée en air en position de retrait.

5. Procédé de nettoyage selon l'une quelconque des revendications 1 à 3, **caractérisé en ce que** la zone de l'extrémité (27) du chalumeau (13) est aspirée en position de retrait.

6. Procédé de nettoyage selon l'une quelconque des revendications 1 à 4, **caractérisé en ce que** l'extrémité (27) du fil d'apport (13) est fondue avant le déplacement en retrait dû au nettoyage.

7. Procédé de nettoyage selon la revendication 6, **caractérisé en ce que** l'extrémité (27) du fil d'apport (13) est fondue par application d'un courant de soudage déterminé et/ou d'une tension de soudage déterminée pendant une période de temps déterminée en fonction du matériau du fil d'apport utilisé (13).

8. Procédé de nettoyage selon l'une quelconque des revendications 1 à 7, **caractérisé en ce que** l'extrémité (27) du fil d'apport (13) est déformée mécaniquement avant le déplacement en retrait dû au nettoyage.

9. Procédé de nettoyage selon la revendication 8, **caractérisé en ce que** l'extrémité (27) du fil d'apport (13) est coupée avant le déplacement en retrait dû au nettoyage.

10. Procédé de nettoyage selon l'une quelconque des revendications 1 à 9, **caractérisé en ce que** le fil d'apport (13) est déplacé en retrait plusieurs fois jusqu'à ce que l'extrémité (27) du fil d'apport (13) se situe au moins dans la longueur (36) du tube de contact (20) et est redéplacé en avant.

11. Procédé de nettoyage selon l'une quelconque des revendications 1 à 10, **caractérisé en ce que** le fil d'apport (13), au début d'une opération de soudage, est déplacé au moins une fois en retrait et en avant.

12. Procédé de nettoyage selon l'une quelconque des revendications 1 à 11, **caractérisé en ce que** le fil d'apport (13), à la fin d'une opération de soudage, est déplacé au moins une fois en retrait et en avant.

13. Procédé de nettoyage selon l'une quelconque des revendications 1 à 12, **caractérisé en ce que** le fil d'apport (13), pendant une opération de soudage, est déplacé au moins une fois en retrait et à nouveau en avant.

14. Procédé de nettoyage selon la revendication 13, **caractérisé en ce que** le fil d'apport (13) est déplacé en retrait et à nouveau en avant en fonction du courant de soudage mesuré et/ou de la tension de soudage mesurée.

15. Procédé de nettoyage selon la revendication 13, **caractérisé en ce que** le fil d'apport (13) est déplacé en retrait et à nouveau en avant en fonction du courant mesuré ou de la tension du dispositif de transport (14) du fil d'apport (13).

16. Procédé de nettoyage selon la revendication 13, **caractérisé en ce que** le fil d'apport (13), après un nombre fixe prédéfini de déplacements en avant et en retrait du fil d'apport (13) dus au processus, est déplacé au moins une fois en retrait et à nouveau en avant.

17. Procédé de nettoyage selon l'une quelconque des revendications 1 à 16, **caractérisé en ce que** le chalumeau (10) est positionné dans un poste de nettoyage et, dans celui-ci, le fil d'apport (13) est déplacé au moins une fois en retrait et à nouveau en avant.

18. Installation de soudage (1) comprenant une source de courant (2) et un chalumeau (10) avec un tube de contact (20) pour alimenter en énergie électrique un fil d'apport (13) déplacé d'un rouleau de fil (14), via un dispositif de transport de fil (11), au chalumeau (10), **caractérisée en ce qu'**il est prévu un dispositif (4) pour commander le dispositif de transport de fil (11) de façon à déplacer le fil d'apport (13) en retrait au moins une fois jusqu'à ce que l'extrémité du fil d'apport (13) se situe au moins dans la longueur (36) du tube de contact (20), et à le déplacer consécutivement en avant à des fins de nettoyage du tube de contact (20).

19. Installation de soudage (1) selon la revendication 18, **caractérisée en ce qu'**il est prévu un dispositif pour alimenter le chalumeau (10) en air pendant le déplacement en retrait et en avant du fil d'apport (13) dû au nettoyage.

20. Installation de soudage (1) selon la revendication 18 ou 19, **caractérisée en ce qu'**il est prévu un dispositif pour aspirer le chalumeau (10) pendant le mouvement en retrait et en avant du fil d'apport (13) dû au nettoyage.

21. Installation de soudage (1) selon l'une quelconque des revendications 18 à 20, **caractérisée en ce qu'**il est prévu un dispositif pour faire fondre l'extrémité (27) du fil d'apport (13) avant le mouvement en retrait et en avant du fil d'apport (13) dû au nettoyage.

22. Installation de soudage (1) selon l'une quelconque des revendications 18 à 21, **caractérisée en ce qu'**il est prévu un dispositif pour le traitement mécanique, en particulier la découpe, de l'extrémité (27) du fil d'apport (13) avant le déplacement en retrait et en avant du fil d'apport (13) dû au nettoyage.

23. Installation de soudage (1) selon l'une quelconque des revendications 18 à 22, **caractérisée en ce que** le dispositif (4) pour commander le dispositif de transport de fil (11) est connecté à un dispositif pour mesurer le courant de soudage et/ou la tension de soudage.

24. Installation de soudage (1) selon l'une quelconque des revendications 18 à 23, **caractérisée en ce que** le dispositif (4) pour commander le dispositif de transport de fil (11) est connecté à un dispositif pour mesurer le courant et/ou la tension du dispositif de transport de fil (11).

25. Installation de soudage (1) selon l'une quelconque des revendications 18 à 24, **caractérisée en ce qu'**il est prévu sur le tube de contact (20) au moins une ouverture radiale (29).

26. Installation de soudage (1) selon la revendication 25, **caractérisée en ce que** la au moins une ouverture radiale (29) est ménagée à l'extrémité (34) du tube de contact (20) qui est opposée à l'ouverture de sortie (25) du fil d'apport (13).

27. Installation de soudage (1) selon la revendication 25 ou 26, **caractérisée en ce qu'**il est prévu sur le tube de contact (20) plusieurs ouvertures (29) distribuées sur le pourtour.
